# EUROPEAN PATENT APPLICATION

(11) **EP 4 679 202 A1**
(43) Date of publication of application: **14.01.2026**
(21) Application number: 24766763.7
(22) Date of filing: 08.02.2024
(51) Int. Cl.: G05B 13/04, B25J 13/08

(54) **CONTROL SYSTEM, CONTROL METHOD, AND PROGRAM**

(30) Priority: 08.03.2023 JP 2023035825
(71) Applicant: Panasonic Intellectual Property Management Co., Ltd., Kadoma-shi, Osaka 571-0057 (JP)
(72) Inventor: GOTO, Kenta, Kadoma-shi, Osaka 571-0057 (JP); NAKAZAWA, Satoshi, Kadoma-shi, Osaka 571-0057 (JP)
(74) Representative: Grünecker Patent- und Rechtsanwälte PartG mbB
(86) International application number: PCT/JP2024/004385
(87) International publication number: WO 2024/185389

(57) **Abstract**

Disclosed herein is a technique for speeding up processing concerning the force control of a control target. A control system (1) performs control about a motion path of a control target (such as a robot Rb1) along which the control target possibly makes direct or indirect contact with an object (9). The control system (1) includes a model predictive controller (3), a determiner (21), and an adjustor (22). The model predictive controller (3) determines, using model predictive control, a manipulative variable to bring external force applied from the object (9) to the control target at a time of the contact into agreement with target force. The determiner (21) determines whether a state of the contact of the control target (such as a robot Rb1) with the object (9) at a first point in time is a first state or a second state. The first point in time is either simultaneous with, or later than, a second point in time when vibration is produced by the contact of the control target with the object (9). The first state is a state before the vibration settles. The second state is a state after the vibration has settled. The adjustor (22) adjusts, in accordance with a decision made by the determiner (21), a horizon length of at least one horizon selected from the group consisting of a prediction horizon and a control horizon. Both the prediction horizon and the control horizon are applied to the model predictive control.

## Description

### Technical Field

The present disclosure generally relates to a control system, a control method, and a program. More particularly, the present disclosure relates to a control system having a model predictive control function, a control method, and a program.

### Background Art

Patent Literature 1 discloses an optimization controller for performing model predictive control on a mobile robot. The optimization controller includes: a contact point planning means for setting a contact plan for a moving means for moving the mobile robot; and a path generating means. The path generating means builds a predictive model using, as an input, a quantity based on the contact force produced when the moving means is put on the ground, represents, using the predictive model, a state variable of the center of gravity of the mobile robot in a prediction interval with a predetermined time width, and calculates the state variable of the center of gravity using an evaluation criterion in the prediction interval. The path generating means performs model predictive control for generating a center of gravity path based on the state variable of the center of gravity thus calculated. The evaluation criterion minimizes, within the prediction interval, an evaluation function including a square of the quantity based on the contact force at each contact point. An optimization problem with an equality constrained condition including an evaluation criterion, a linear state equation representing a relationship between input based on the contact force and the state variable of the center of gravity, and the equality constrained condition expressed by a linear equality of the mobile robot is transformed, using an orthogonal complement, into an optimization problem with no constrained conditions including no equality constrained conditions. The path generating means solves the optimization problem with no constrained conditions by a recursive calculation method to find an optimum solution and calculates the state variable of the center of gravity based on the optimum solution thus found.

Patent Literature 1 allows an optimization problem with no constrained conditions to be solved more speedily by finding an optimum solution using the recursive calculation method, thereby generating a center of gravity path speedily which allows the mobile robot to move with stability within the prediction interval.

### Citation List

### Patent Literature

Patent Literature 1: JP 2016-198873 A

### Summary of Invention

The processing concerning the force control of a control target such as a robot still tends to take a relatively long time and needs to be further speeded up.

In view of the foregoing background, it is therefore an object of the present disclosure to provide a control system, a control method, and a program, all of which contribute to speeding up such processing concerning the force control of a control target.

A control system according to an aspect of the present disclosure performs control about a motion path of a control target along which the control target possibly makes direct or indirect contact with an object. The control system includes a model predictive controller, a determiner, and an adjustor. The model predictive controller determines, using model predictive control, a manipulative variable to bring external force applied from the object to the control target at a time of the contact into agreement with target force. The determiner determines whether a state of the contact of the control target with the object at a first point in time is a first state or a second state. The first point in time is either simultaneous with, or later than, a second point in time when vibration is produced by the contact of the control target with the object. The first state is a state before the vibration settles. The second state is a state after the vibration has settled. The adjustor adjusts, in accordance with a decision made by the determiner, a horizon length of at least one horizon selected from the group consisting of a prediction horizon and a control horizon. Both the prediction horizon and the control horizon are applied to the model predictive control.

A control method according to another aspect of the present disclosure is a method for performing control about a motion path of a control target along which the control target possibly makes direct or indirect contact with an object. The control method includes a model predictive control step, a determination step, and an adjustment step. The model predictive control step includes determining, using model predictive control, a manipulative variable to bring external force applied from the object to the control target at a time of the contact into agreement with target force. The determination step includes determining whether a state of the contact of the control target with the object at a first point in time is a first state or a second state. The first point in time is either simultaneous with, or later than, a second point in time when vibration is produced by the contact of the control target with the object. The first state is a state before the vibration settles. The second state is a state after the vibration has settled. The adjustment step includes adjusting, in accordance with a decision made in the determination step, a horizon length of at least one horizon selected from the group consisting of a prediction horizon and a control horizon. Both the prediction horizon and the control horizon are applied to the model predictive control.

A program according to still another aspect of the present disclosure is designed to cause one or more processors to perform the control method described above.

The present disclosure achieves the advantage of contributing to speeding up processing concerning the force control of a control target.

### Brief Description of Drawings

[FIG. 1] FIG. 1 is a block diagram illustrating a configuration for a control system according to an exemplary embodiment;
[FIG. 2] FIG. 2 is a conceptual diagram illustrating a control target (robot) to which the control system is applied;
[FIG. 3A] FIG. 3A shows a modeled robot and workpiece to illustrate how the situation changes before and after a vibration which may be produced when the robot comes into contact with the workpiece settles;
[FIG. 3B] FIG. 3B shows a modeled robot and workpiece to illustrate how the situation changes before and after a vibration which may be produced when the robot comes into contact with the workpiece settles;
[FIG. 3C] FIG. 3C shows a modeled robot and workpiece to illustrate how the situation changes before and after a vibration which may be produced when the robot comes into contact with the workpiece settles;
[FIG. 4] FIG. 4 is a graph showing the characteristics of external force that the robot receives before and after the vibration settles;
[FIG. 5A] FIG. 5A is a graph showing a prediction horizon and a control horizon which are applied to the model predictive control performed by the control system;
[FIG. 5B] FIG. 5B is a graph showing a prediction horizon and a control horizon which are applied to the model predictive control performed by the control system;
[FIG. 6] FIG. 6 is a flowchart showing the procedure of operation of the control system; and
[FIG. 7] FIG. 7 is a block diagram illustrating a configuration for a variation of the control system.

### Description of Embodiments

### (Overview)

A control system, control method, and program according to an exemplary embodiment and its variations will now be described with reference to the accompanying drawings. Note that the embodiment and its variations to be described below are only an exemplary one of various embodiments of the present disclosure and its variations and should not be construed as limiting. Rather, the exemplary embodiment and its variations may be readily modified in various manners depending on a design choice or any other factor without departing from the scope of the present disclosure. Optionally, the configuration according to any of the variations that will be described later may be adopted as appropriate in combination with the configuration of the exemplary embodiment or any other variation(s).

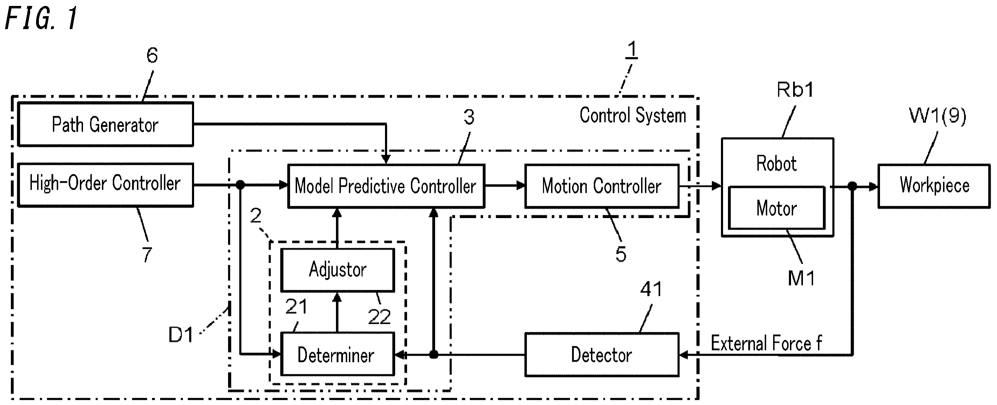

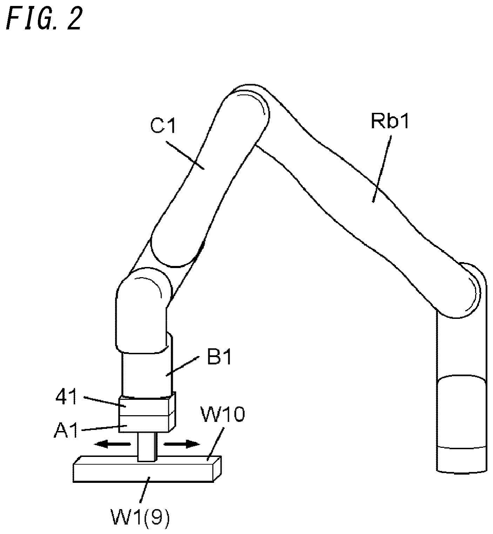

FIG. 1 is a block diagram illustrating a configuration for a control system 1 according to an exemplary embodiment. FIG. 2 is a conceptual diagram illustrating a robot Rb1 as an exemplary control target to which the control system 1 is applied. A control system 1 (refer to FIG. 1) according to an aspect is a system that uses the function of model predictive control (hereinafter abbreviated as "MPC") for doing optimization while predicting a future response at each point in time.

The control system 1 is configured to perform, using the result of prediction obtained by the MPC, force control on a robot Rb1 (refer to FIGS. 1 and 2), which is an exemplary control target. The MPC solves an optimization problem in every control cycle based on a model of the control target (robot Rb1) and the control system 1 performs feedback control on the control target (robot Rb1) based on the result. That is to say, the control system 1 gives control input to the control target (robot Rb1) using the result of prediction by the MPC.

Note that the control target (plant) according to the present disclosure is not limited to a robot Rb1 but may also be a control target of a different drive system. For example, the control target may also be a piece of equipment such as a carrier, an automobile, an airplane, or a drone.

In this embodiment, the control system 1 performs control about the motion path of a control target (such as a robot Rb1) along which the control target possibly makes direct or indirect contact with an object 9. In other words, the control system 1 performs the force control of the control target while controlling the posture, position, and other parameters of the control target to instruct the control target to follow a predetermined motion path plan during either a process before the control target contacts with the object 9 or a process after the control target has contacted with the object 9.

The robot Rb1 may be any type of robot without limitation. In the example to described below, the robot Rb1 is herein supposed to be a vertically articulated robot in the shape of an arm as shown in FIG. 2.

The vertically articulated robot (robot Rb1) is herein supposed to be a work robot (industrial robot) for performing a predetermined type of operations on a given workpiece W1 (object 9) in a facility such as a factory. However, the robot Rb1 is not limited to an industrial robot.

Also, for example, the object 9 may be a metallic member. Nevertheless, the object 9 is not limited to a workpiece W1 as a work target and does not have to be a metal (member), either. Rather the object 9 may be not only a metallic member but also a resin (e.g., an elastic member such as rubber) member, a glass member, a fiber member, a wooden member, or a paper member, for example.

The operations process step may be, for example, a polishing process step of polishing the surface W10 (refer to FIG. 2) of the workpiece W1 (metallic member). The vertically articulated robot (robot Rb1) holds an end effector A1 for polishing at an arm tip portion B1 (refer to FIG. 2) thereof and makes an indirect contact with the object 9 via the end effector A1. However, the operations process step does not have to be the polishing process step but may also be a cutting process step or a painting process step to be performed on the surface W10 of the workpiece W1. Alternatively, the operations process step may also be the process step of having the robot Rb1 hold a pen, for example, to make the robot Rb1 draw a character, a sign, or a figure, for example.

The control system 1 includes a model predictive controller 3, a determiner 21, and an adjustor 22 as shown in FIG. 1. The model predictive controller 3 determines, using model predictive control, a manipulative variable (hereinafter referred to as a "first manipulative variable") to cause external force applied from the object 9 to the control target (such as the robot Rb1) at a time of the contact to agree with target force. The model predictive controller 3 outputs a control signal including the first manipulative variable thus determined.

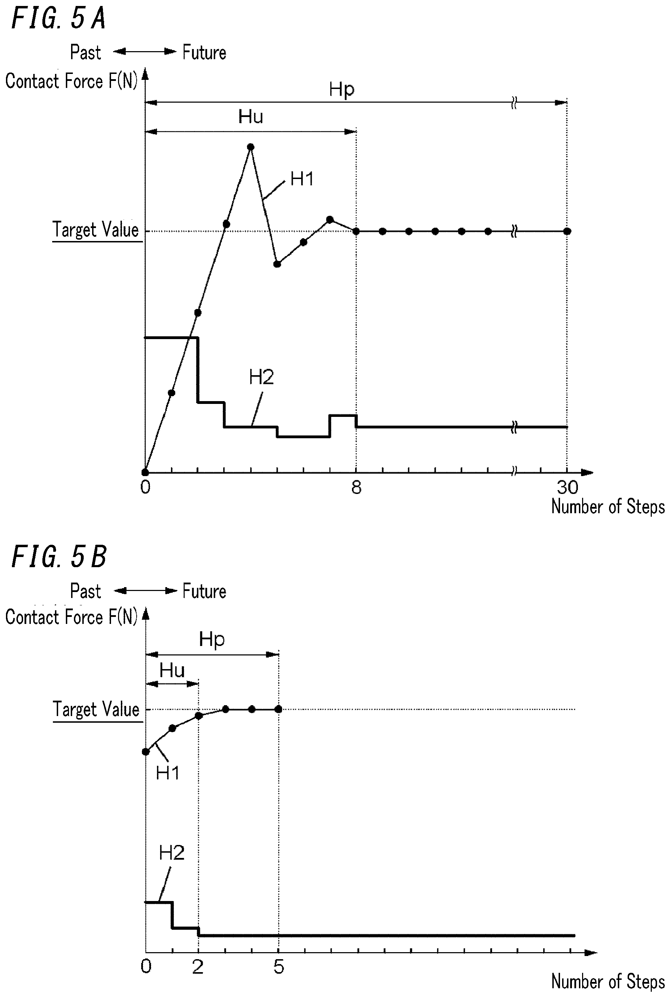

The determiner 21 determines whether a state of the contact of the control target (such as the robot Rb1) with the object 9 at a first point in time is a first state or a second state. The first point in time is either simultaneous with, or later than, a second point in time when vibration is produced by the contact of the control target (such as the robot Rb1) with the object 9. The first state is a state before the vibration settles. The second state is a state after the vibration has settled. The adjustor 22 adjusts, in accordance with a decision made by the determiner 21, a horizon length of at least one horizon selected from the group consisting of a prediction horizon Hp and a control horizon Hu. Both the prediction horizon Hp and the control horizon Hu are applied to the model predictive control (to be described later with reference to FIGS. 5A and 5B). In the following description, the adjustor 22 adjusts the horizon lengths of both the prediction horizon Hp and the control horizon Hu, for example.

This control system 1 adjusts the horizon length of at least one horizon selected from the group consisting of the prediction horizon Hp and the control horizon Hu depending on whether the state of contact of the vertically articulated robot (robot Rb1) with the object 9 is the first state or the second state. This may shorten the calculation time of the model predictive control. Consequently, this control system 1 achieves the advantage of contributing to speeding up the processing concerning the force control of a control target.

A control method according to an aspect is a method for controlling a control system 1 that performs control about a motion path of a control target (such as a robot Rb1) along which the control target possibly makes direct or indirect contact with an object 9. The control method includes a model predictive control step, a determination step, and an adjustment step. The model predictive control step includes determining, using model predictive control, a manipulative variable to cause external force applied from the object 9 to the control target at a time of the contact to agree with target force. The determination step includes determining whether a state of the contact of the control target (such as a robot Rb1) with the object 9 at a first point in time is a first state or a second state. The first point in time is either simultaneous with, or later than, a second point in time when vibration is produced by the contact of the control target with the object 9. The first state is a state before the vibration settles. The second state is a state after the vibration has settled. The adjustment step includes adjusting, in accordance with a decision made in the determination step, a horizon length of at least one horizon selected from the group consisting of a prediction horizon Hp and a control horizon Hu. Both the prediction horizon Hp and the control horizon Hu are applied to the model predictive control. This control method achieves the advantage of contributing to speeding up the processing concerning the force control of a control target.

This control method is used on a computer system (i.e., the control system 1). That is to say, this control method may also be implemented as a computer program. A program according to still another aspect is designed to cause one or more processors to perform the control method described above. Optionally, the program may be stored on a non-transitory storage medium which is readable for a computer.

### (Details)

### (1) Overall configuration

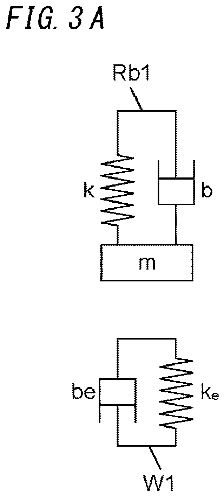

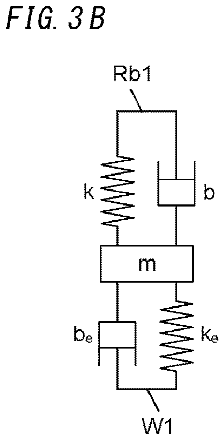

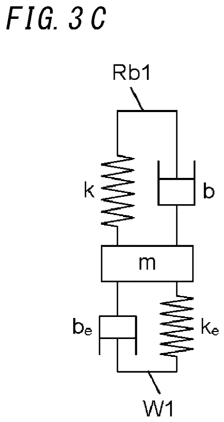

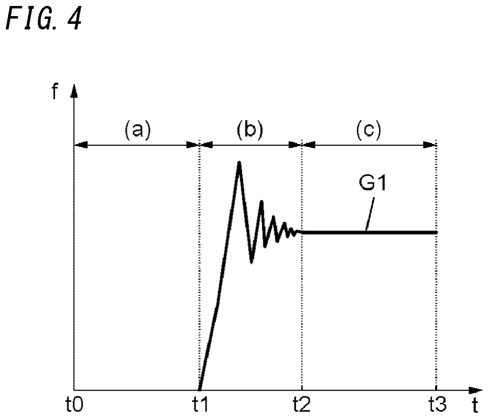

An overall system, including a control system 1 according to this embodiment and its peripheral constituent elements, will now be described in detail with reference to FIGS. 1-5B. In the following description, the control system 1 will be described on the supposition that the control target is a robot Rb1. FIG. 3 is a graph for use to describe what a prediction horizon is in the control system 1. FIGS. 4A-4C are conceptual diagrams illustrating target paths for the control system 1. FIGS. 3A-3C show a modeled robot and workpiece to illustrate how the situation changes before and after a vibration which may be produced when the robot Rb1 comes into contact with the workpiece settles. FIG. 4 is a graph showing the characteristics of external force that the robot Rb1 receives before and after the vibration settles. Each of FIGS. 5A and 5B is a graph showing a prediction horizon and a control horizon which are applied to the model predictive control performed by the control system 1.

The control system 1 performs control, for example, to make the robot Rb1 perform polishing treatment on the surface of the object 9 (metallic member), as described above. Under the control of the control system 1, the robot Rb1 polishes the surface W10 of the workpiece W1 with the pressing force applied to the surface W10 of the workpiece W1 (object 9) made substantially constant.

The robot Rb1 is a so-called "manipulator" which has a structure similar to that of a human arm and may be, for example, a vertically articulated robot in the shape of an arm. The number of axes of the robot Rb1 is not limited to any particular number. The robot Rb1 may have the degree of freedom of six or seven axes, for example. The robot Rb1 includes: a plurality of movable parts C1 (refer to FIG. 2) including the arm tip portion B1; a single or a plurality of motors M1 (refer to FIG. 1; such as a servo motor) for turning the plurality of movable parts C1 by a specified angle; and a speed reducer mechanism.

A detector 41 (to be described later) and the end effector A1 (refer to FIG. 2) for use in polishing treatment may be attached to the arm tip portion B1 of the robot Rb1. The arm tip portion B1 of the robot Rb1 may make (indirect) contact with the object 9 via the detector 41 and the end effector A1. After the arm tip portion B1 has been brought into contact with the object 9 the control system 1 performs control about the motion path of the robot Rb1 along the surface W10 of the workpiece W1 to make the robot Rb1 polish the surface W10 of the workpiece W1. The control system 1 is electrically connected to the control target (e.g., the robot Rb1 in this example) and configured to give control input to the control target (robot Rb1). In this embodiment, the control target for the control system 1 is supposed to be the single or plurality of motors M1 of the robot Rb1.

Note that in the following description, once the arm tip portion B1 of the robot Rb1 has started coming into (indirect) contact with the object 9 for the first time after having approached the object 9 from a distant position, the robot Rb1 is supposed to keep the "contact state" from that time on unless the robot Rb1 is out of contact with the object 9 for a certain period of time (of a few seconds, for example) or more. That is to say, even if a bound of a small magnitude has occurred to bring the arm tip portion B1 out of contact with the object 9 for less than the certain period of time (just momentarily) after the arm tip portion B1 has come into contact with the object 9, the arm tip portion B1 is regarded as still keeping the "contact state."

The control system 1 includes a computer system including one or more processors and a memory. At least some functions of the control system 1 are performed by making the processor of the computer system execute a program stored in the memory of the computer system. The program may be stored in advance in the memory. Alternatively, the program may also be downloaded via a telecommunications line such as the Internet or distributed after having been stored in a non-transitory storage medium such as a memory card.

As shown in FIG. 1, the control system 1 includes a processor 2, a model predictive controller 3, a motion controller 5, a path generator 6, a high-order controller 7, and the detector 41. In other words, the control system 1 performs the respective functions of the processor 2, the model predictive controller 3, the motion controller 5, the path generator 6, the high-order controller 7, and the detector 41. These functions of the control system 1 may be either housed in a single housing or distributed in multiple housings, whichever is appropriate. Note that the high-order controller 7 does not have to be one of constituent elements of the control system 1.

The detector 41 is attached to the arm tip portion B1, for example. Specifically, the detector 41 is provided between the arm tip portion B1 and the end effector A1 as shown in FIG. 2. The detector 41 includes a force sensor, for example. The detector 41 detects the external force f (refer to FIG. 1: i.e., the contact force applied by the control target to the object 9) that the detector 41 receives from the object 9 via the end effector A1 in a state where the control target (robot Rb1) is in contact with the object 9. In other words, the detector 41 detects the external force f (refer to FIG. 1) applied to the control target (robot Rb1) in the state where the control target (robot Rb1) is in contact with the object 9. The detector 41 outputs a detection signal, including information about a physical quantity concerning the external force f thus detected, to the model predictive controller 3 and the processor 2. In this case, the external force f is mainly the force received along a normal vector defined with respect to the surface W10 of the workpiece W1 in contact with the control target.

The model predictive controller 3 has an MPC function. The model predictive controller 3 includes a storage unit. The storage unit includes an electrically programmable nonvolatile semiconductor memory such as a flash memory. The storage unit stores a predictive model about the control target (robot Rb1). As the predictive model, a transfer function model or a state space model, for example, may be used.

As the MPC, the Receding Horizon control (RH control) is performed in which a control output profile of a predetermined amount of time from the current time to a certain point in time in the future is optimized, thereby using only an initial value of the profile as a control input profile. The RH control is a control technique for optimizing, at each point in time, the response until a future point in time later than the current time by a finite amount of time. According to the RH control, an estimated time length of the output profile H1 (refer to FIGS. 5A and 5B) is used as a prediction horizon Hp and an estimated length of the input profile H2 (refer to FIGS. 5A and 5B) is used as a control horizon Hu. In the example shown in FIG. 5A, (the horizon length of) the prediction horizon Hp corresponds to 30 steps and (the horizon length of) the control horizon Hu corresponds to 8 steps. The control horizon Hu is basically shorter than the prediction horizon Hp.

In FIGS. 5A and 5B, the abscissa indicates the number of steps (time), and the ordinate indicates the contact force F (of which the unit is [N]). The "target value" shown in FIGS. 5A and 5B is the value of target force entered from the high-order controller 7. According to MPC, control is performed to bring the external force f (in other words, the contact force F) into agreement with this target value.

The model predictive controller 3 defines, using the state space model of the control target (robot Rb1), for example, a state variable with the external force f regarded as a state quantity and calculates such a manipulative variable that optimizes (e.g., minimizes) the deviation of the external force f (i.e., difference from the target force).

The model predictive controller 3 calculates, using the prediction model, a predictive value of the external force f in an interval from the current time k through a time (k + Hp) which is later than the current time k by the prediction horizon Hp. The model predictive controller 3 adopts the values of the first few steps (i.e., the control horizon Hu) of the prediction horizon Hp as the control input as indicated by the input profile H2.

The model predictive controller 3 is electrically connected to the detector 41 to receive a detection signal from the detector 41.

The model predictive controller 3 acquires, in a predetermined sampling cycle, data about the external force f from the detection signal provided by the detector 41 to calculate a predictive value of the external force f in the future as indicated by the output profile H1. In addition, the model predictive controller 3 receives not only the data about the external force f but also three sets of input data as well. The model predictive controller 3 determines a first manipulative variable based on the data about the external force f and the three sets of input data. The three sets of input data include target value data, path data, and horizon adjustment data. The target value data is provided by the high-order controller 7 (refer to FIG. 1). The path data is provided by the path generator 6. The horizon adjustment data is provided by (the adjustor 22 of) the processor 2. The model predictive controller 3 applies the horizon lengths of the prediction horizon Hp and the control horizon Hu that have been set using the horizon adjustment data. The horizon adjustment data will be described later.

That is to say, the model predictive controller 3 determines, using the MPC, a first manipulative variable (i.e., the contact force in the input profile H2) as a variation required to bring the external force f into agreement with the target force (i.e., the target value shown in FIGS. 5A and 5B) based on the data about the target value, the path data, and the external force f (controlled variable) applied from the object 9 to the control target (robot Rb1). The model predictive controller 3 is electrically connected to the motion controller 5 to output a control signal (such as a digital signal) including the first manipulative variable to the motion controller 5. The model predictive controller 3 outputs, since the polishing treatment has started to be performed, for example, the control signal including the first manipulative variable both in a state where the robot Rb1 is out of contact with the workpiece W1 and in a state where the robot Rb1 is in contact with the workpiece W1.

The first manipulative variable may be a manipulative variable about at least one selected from the group consisting of the position, posture, speed, acceleration, contact force (in other words, the external force f), and torque of the robot Rb1. The model predictive controller 3 calculates, using the prediction model, the first manipulative variable based on the data about the external force f on a sampling cycle basis.

Although a detailed description thereof is omitted, the model predictive controller 3 acquires not only the external force f (as a controlled variable) but also a controlled variable provided by the robot Rb1 (such as the position, speed, and other parameters of the motor M1 provided by the encoder) and determines the manipulative variable (first manipulative variable) to bring the manipulative variable into agreement with the target value.

The high-order controller 7 is implemented as, for example, a programmable logic controller (PLC). The high-order controller 7 is communicatively connected to a servo driver D1 (refer to FIG. 1). The high-order controller 7 generates a command signal including an operating command (command value data) about a predetermined operations process step (e.g., polishing process step) and transmits the command signal to the servo driver D1 to control the servo driver D1. In this embodiment, the servo driver D1 may be implemented as, for example, a combination of the processor 2, the model predictive controller 3, and the motion controller 5 of the control system 1. The servo driver D1 performs drive control on a single or a plurality of motors M1 (control targets) for driving the plurality of movable parts C1 of the robot Rb1. The operating command (command value data) includes the target force (target value) of the external force described above and may also include target values about the position, posture, speed, acceleration, and torque of the robot Rb1.

In this embodiment, the operating command (target value data) from the high-order controller 7 may be input to, for example, the model predictive controller 3 and (the determiner 21 (to be described later) of) the processor 2 in the servo driver D1.

The path generator 6 generates data about the motion path (i.e., path data) and enters the path data into the model predictive controller 3. The path generator 6 is communicatively connected to the servo driver D1. The path generator 6 generates path data including a path plan concerning the posture of the robot Rb1 and the traveling route, for example. The path data is generated as three-dimensional coordinate data based on, for example, computer aided design (CAD) data or computer aided manufacturing (CAM) data about the robot Rb1 and the workpiece W1 (object 9), for example.

The motion controller 5 controls the motion of the control target (robot Rb1) in accordance with the manipulative variable (first manipulative variable) provided by the model predictive controller 3. Specifically, the motion controller 5 determines a second manipulative variable based on the first manipulative variable provided by the model predictive controller 3 and enters the second manipulative variable into the robot Rb1 (i.e., enters control input). The second manipulative variable may be, for example, the torque (value) of the motor M1 or the current value of a drive current to be supplied to the motor M1. The motion controller 5 may include, for example, an inverter circuit for supplying electric power to the motor M1. The motion controller 5 determines, based on the first manipulative variable such as the position, posture, speed, acceleration, contact force, or torque of the robot Rb1, the current value of the drive current to be supplied to the motor M1 (i.e., the second manipulative variable) and controls the inverter circuit to adjust the drive current to be supplied to the motor M1.

The processor 2 generates horizon adjustment data and enters the horizon adjustment data into the model predictive controller 3. The processor 2 is electrically connected to the model predictive controller 3. The processor 2 acquires the target force (target value) of the external force which forms part of the target value data transmitted from the high-order controller 7 to the servo driver D1. In addition, the processor 2 is also electrically connected to the detector 41 and acquires the result of detection (detection signal) obtained by the detector 41. The processor 2 includes a determiner 21 and an adjustor 22 as shown in FIG. 1.

The determiner 21 determines whether a state of contact of the robot Rb1 with the object 9 at a first point in time is a first state or a second state. The first point in time is either simultaneous with, or later than, a second point in time when vibration is produced by the contact of the robot Rb1 with the object 9. The first state is a state before the vibration settles. The second state is a state after the vibration has settled. In this embodiment, the determiner 21 determines, based on a relationship between the target force (target value) and the result of detection obtained by the detector 41, whether the state of contact is the first state or the second state.

Next, the non-contact state, the first state, and the second state will be described with reference to FIGS. 3A-3C and FIG. 4.

FIGS. 3A-3C show a robot Rb1 and a workpiece W1 which are modeled as system including mass, springs, and dampers to illustrate how the situation changes before and after a vibration which may be produced when the robot Rb1 comes into contact with the workpiece W1 settles. In each of FIGS. 3A-3C, the robot Rb1 is modeled as a system including mass m, a spring k, and a damper b, and an environment including the workpiece W1 is modeled as a system including a spring ke and a damper be. The amplitude of the vibration and the time it takes for the vibration to settle depend on the mass m, spring k, and damper b of the robot Rb1 and on the spring ke and damper be of the workpiece W1.

FIG. 4 is a graph showing, as a variation characteristic curve G1, how the external force f varies with the passage of time. In FIG. 4, the abscissa indicates the time, and ordinate indicates the external force f that the robot Rb1 receives from the workpiece W1.

FIG. 3A illustrates a state where the robot Rb1 and the workpiece W1 are not in contact with each other yet (i.e., in a non-contact state). In the variation characteristic curve G1 shown in FIG. 4, the interval (a) from a time t0 through a time t1 corresponds to the non-contact state.

FIG. 3B illustrates a first state in which the robot Rb1 and the workpiece W1 are in contact with each other but vibration has been produced due to the contact and has not settled yet. In the variation characteristic curve G1 shown in FIG. 4, the robot Rb1 and the workpiece W1 start coming into contact with each other at the time t1 and an interval (b) from the time t1 indicating the point in time of contact through a time t2 corresponds to the first state. In the first state, the external force f increases steeply at the time t1, immediately starts increasing and decreasing due to the vibration produced, and settles gradually.

The feedback control of the external force f and other parameters by the MPC is started at the time t0, for example. Meanwhile, the robot Rb1 starts performing the polishing process step following the path plan at the time t1 (i.e., at the contact point in time).

FIG. 3C illustrates a second state where the robot Rb1 and the workpiece W1 are in contact with each other but the vibration has already settled. In the variation characteristic curve G1 shown in FIG. 4, an interval (c) from the time t2 through a time t3 corresponds to the second state. In the second state, the external force f is substantially constant.

That is to say, from the time t1 when the contact was made for the first time and on, the external force f is controlled by the MPC to agree with the target force (target value). Once the vibration has settled completely at the time t2, the external force f almost agrees with the target force.

In this embodiment, in the non-contact state corresponding to the interval (a) shown in FIG. 4, the control system 1 performs, using the MPC function, impedance control for controlling the robot Rb1 to stay in the target position when force is applied to the end effector A1 with the target position and a target impedance (i.e., a parameter for the spring, the mass, and the damper) set. Also, in the first state corresponding to the interval (b) shown in FIG. 4, the control system 1 performs, using the MPC function, admittance control for controlling the robot Rb1 to equalize the external force f applied to the end effector A1 with the target force. Furthermore, in the second state corresponding to the interval (c) shown in FIG. 4, the control system 1 performs, using the MPC function, hybrid control for controlling the robot Rb1 with an adequate balance struck between the force control and the position control.

The determiner 21 is configured to perform at least one of first determination processing or second determination processing (e.g., both the first determination processing and the second determination processing in this example).

The first determination processing is the processing of determining whether a calculated value based on the difference between the target force and the external force is equal to or less than a predetermined value. In this embodiment, the "calculated value based on the difference between the target force and the external force" may be given by, for example, | Fd - Fm | / Fd, where Fm is the external force f detected (measured) by the detector 41 and Fd is the target force instructed by the high-order controller 7. The predetermined value is supposed to be 0.1, for example. That is to say, speaking in terms of percentage, the first determination processing includes determining whether the absolute value of the difference between the target force and the external force is equal to or less than 10% of the target force Fd.

The second determination processing is the processing of determining whether the duration of a state where the calculated value remains equal to or less than the predetermined value is equal to or longer than a predetermined period. The predetermined period is supposed to be 1 second, for example.

In this embodiment, the determiner 21 determines the contact state to be the first state if the calculated value has turned out to be greater than the predetermined value in the first determination processing. On the other hand, in this embodiment, the determiner 21 determines the contact state to be the first state, if the duration of the state where the calculated value is equal to or less than the predetermined value has turned out to be shorter than the predetermined period in the second determination processing. Furthermore, if the calculated value is equal to or less than the predetermined value and the duration of the state where the calculated value remains equal to or less than the predetermined value is equal to or longer than the predetermined period, then the determiner 21 determines the contact state to be the second state.

In this embodiment, the determiner 21 performs the first determination processing and the second determination processing repeatedly with respect to the target force. For example, the determiner 21 acquires data about the external force Fm in a particular sampling cycle from the detection signal provided by the detector 41, performs the first determination processing every particular sampling cycle, and performs the second determination processing if the calculated value is equal to or less than the predetermined value.

The adjustor 22 adjusts, in accordance with the decision made by the determiner 21, the horizon length of at least one horizon selected from the group consisting of the prediction horizon Hp and the control horizon Hu (refer to FIGS. 5A and 5B) that are applied to the model predictive control. In this embodiment, if the determiner 21 has determined the contact state to be the second state, then the adjustor 22 adjusts (sets) the horizon length of at least one horizon to make the horizon length in the second state shorter than the horizon length in the first state. In this embodiment, the adjustor 22 adjusts (sets) the horizon lengths of both the prediction horizon Hp and the control horizon Hu as an example. The adjustor 22 generates horizon adjustment data including information about the prediction horizon Hp and the control horizon Hu that have been adjusted and enters the horizon adjustment data into the model predictive controller 3.

Multiple different horizon lengths to be set may be provided in advance for each of the prediction horizon Hp and the control horizon Hu. For example, the processor 2 may store, in a memory, information about the multiple different horizon lengths.

For example, if the horizon length of the prediction horizon Hp in the first state has been set at a first horizon length, then the adjustor 22 sets the horizon length of the prediction horizon Hp in the second state at a second horizon length which is shorter than the first horizon length. Also, if the horizon length of the control horizon Hu in the first state has been set at a third horizon length, then the adjustor 22 sets the horizon length of the control horizon Hu in the second state at a fourth horizon length which is shorter than the third horizon length.

In this embodiment, the adjustor 22 respectively sets the horizon lengths of the prediction horizon Hp and control horizon Hu in the non-contact state at the same horizon lengths as those of the prediction horizon Hp and the control horizon Hu in the first state. However, this is only an example and should not be construed as limiting. Alternatively, the horizon lengths in the non-contact state may be different from the horizon lengths in the first state.

With this regard, FIG. 5A shows the prediction horizon Hp and the control horizon Hu in the first state. FIG. 5B shows the prediction horizon Hp and the control horizon Hu in the second state.

In FIG. 5A, the adjustor 22 sets a prediction horizon Hp, of which the horizon length corresponds to 30 steps from the current time (at the origin 0) through a point in time in the future, and also sets a control horizon Hu, of which the horizon length corresponds to 8 steps from the current time through another point in time in the future.

In FIG. 5B on the other hand, the adjustor 22 sets a prediction horizon Hp, of which the horizon length corresponds to 5 steps from the current time (at the origin 0) through a point in time in the future, and also sets a control horizon Hu, of which the horizon length corresponds to 2 steps from the current time through another point in time in the future.

Note that each of the steps shown in FIGS. 5A and 5B corresponds to an interval with a predetermined time length. This time length is not limited to any particular value.

In short, the horizon length (of 5 steps) of the prediction horizon Hp in the second state is set to be shorter than the horizon length (of 30 steps) of the prediction horizon Hp in the first state. Aso, the horizon length (of 2 steps) of the control horizon Hu in the second state is set to be shorter than the horizon length (of 8 steps) of the control horizon Hu in the first state.

Note that the horizon lengths shown in FIGS. 5A and 5B are only examples and should not be construed as limiting.

The horizon length is set to be relatively long in the first state and relatively short in the second state on the following ground. Specifically, it is difficult for the model predictive controller 3 to predict the timing at which the robot Rb1 will come into contact with the workpiece W1. That is why in the non-contact state and the first state, a relatively long horizon length may be needed with respect to the prediction horizon Hp. In the first state, in particular, vibration is produced, thus requiring such high-accuracy control that would settle the vibration, and therefore, the control horizon Hu may also need to have a relatively long horizon length. In the second state, on the other hand, the control system 1 only needs to control the posture and position of the robot Rb1 along the normal vector and move the robot Rb1 with respect to the surface W10 of the workpiece W1 in accordance with the path data calculated based on the CAD data or the CAM data. That is to say, in the second state, there are relatively slim chances that a significant disturbance occurs suddenly. On this ground, the control system 1 adjusts the horizon length to a shorter one, for example, in the second state, thereby attempting to shorten the calculation time for the MPC.

### (2) Operation of control system

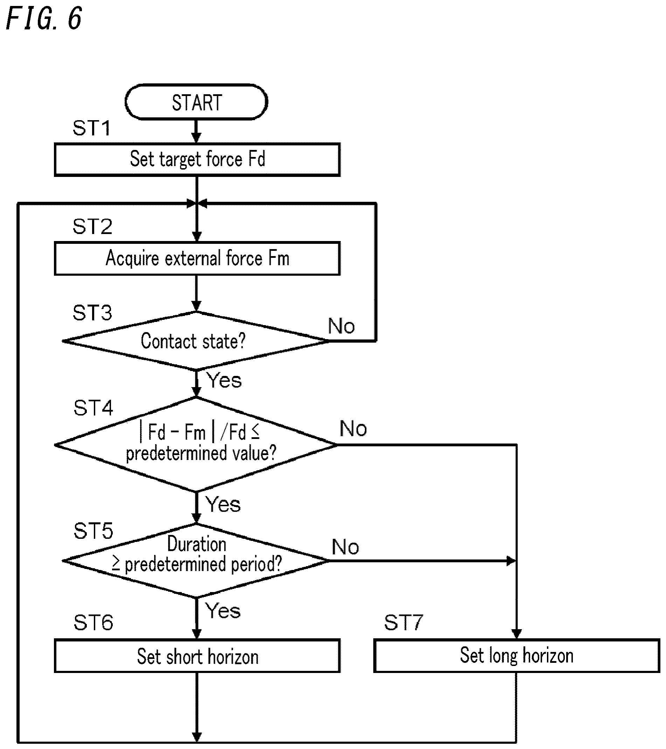

Next, an exemplary procedure of operation of the control system 1, in particular, a series of processing steps to be performed by the processor 2 to adjust (set) the prediction horizon Hp and the control horizon Hu, will be described with reference to FIG. 6. FIG. 6 is a flowchart showing the procedure of operation of the control system 1. Note that the flowchart shown in FIG. 6 shows only an exemplary procedure of operation of the control system 1 and should not be construed as limiting. Optionally, the processing steps shown in FIG. 6 may be performed in a different order from the illustrated one, some of the processing steps shown in FIG. 6 may be omitted as appropriate, and/or an additional processing step may be performed as needed.

First, the processor 2 sets target force Fd based on target value data provided by the high-order controller 7 (in Step ST1).

The processor 2 acquires, in a particular sampling cycle, the external force Fm detected (measured) by the detector 41 (in Step ST2).

The processor 2 monitors the external force Fm to determine whether the robot Rb1 is in contact with the workpiece W1 (in Step ST3).

If a decision has been made that the external force Fm be greater than a reference value and the robot Rb1 be in contact with the workpiece W1 (if the answer is YES in Step ST3), then the processor 2 makes the determiner 21 perform the first determination processing every particular sampling cycle (determination step). Note that as long as the external force Fm is equal to or less than the reference value (if the answer is NO in Step ST3), the processor 2 continues to monitor the external force Fm and other parameters.

The determiner 21 performs the first determination processing to determine whether the calculated value (| Fd - Fm | /Fd) is equal to or less than a predetermined value (of 0.1, for example) (in Step ST4). If the calculated value (| Fd - Fm | /Fd) is greater than the predetermined value (if the answer is NO in Step ST4), then the determiner 21 determines the contact state to be the first state. Then, the adjustor 22 performs adjustment processing (adjustment step) and sets, in accordance with the decision made by the determiner 21, the prediction horizon Hp and the control horizon Hu at the first horizon length and the third horizon length, respectively (in Step ST7: set long horizon) and the process returns to Step ST2.

If the calculated value (| Fd - Fm | /Fd) is equal to or less than the predetermined value (if the answer is YES in Step ST4), then the determiner 21 performs the second determination processing (determination step). The determiner 21 performs the second determination processing of determining whether the duration of a state where the calculated value (| Fd - Fm | /Fd) remains equal to or less than the predetermined value is equal to or longer than the predetermined period (of 1 second, for example) (in Step ST5). If the duration of the state where the calculated value (| Fd - Fm | /Fd) remains equal to or less than the predetermined value is shorter than the predetermined period (if the answer is NO in Step ST5), then the determiner 21 determines the contact state to be the first state. Then, the adjustor 22 performs adjustment processing (adjustment step) and sets, in accordance with the decision made by the determiner 21, the prediction horizon Hp and the control horizon Hu at the first horizon length and the third horizon length, respectively (in Step ST7: set long horizon) and the process returns to Step ST2.

On the other hand, if the duration of the state where the calculated value (| Fd - Fm | /Fd) remains equal to or less than the predetermined value is equal to or longer than the predetermined period (if the answer is YES in Step ST5), then the determiner 21 determines the contact state to be the second state. Then, the adjustor 22 performs adjustment processing (adjustment step) and sets, in accordance with the decision made by the determiner 21, the prediction horizon Hp and the control horizon Hu at the second horizon length and the fourth horizon length, respectively (in Step ST6: set short horizon) and the process returns to Step ST2.

Note that if the polishing process step on the workpiece W1 has been finished or if the robot Rb1 has been out of contact with the workpiece W1 for a predetermined period (of a few seconds, for example) or more, the processor 2 ends the processing concerning the adjustment of horizon.

### (3) Advantages

As can be seen from the foregoing description, the control system 1 according to this embodiment adjusts the horizon lengths of the prediction horizon Hp and the control horizon Hu depending on whether the contact state is the first state or the second state. That is to say, this allows the lengths of respective horizons applied to the MPC to be increased and/or decreased dynamically. This may shorten the calculation time of the model predictive control. Consequently, this control system 1 achieves the advantage of contributing to speeding up the processing concerning the force control of a control target.

In particular, in the first state before the vibration settles, prediction control needs to be performed with the amplitude of the vibration taken into account, and therefore, the accuracy of the MPC performed by the model predictive controller 3 tends to decrease. To maintain sufficient accuracy, the calculation time of the MPC tends to be rather long. On the other hand, in the second state after the vibration has already settled, basically the motion path of the control target (robot Rb1) on the surface W10 of the workpiece W1 is stabilized and the accuracy of the MPC is less likely to decrease. In this respect, the adjustor 22 adjusts the respective horizon lengths of the prediction horizon Hp and the control horizon Hu in the second state to make the horizon lengths in the second state shorter than the horizon lengths in the first state. This makes it easier to shorten the calculation time of the model predictive controller 3 from the viewpoint of the overall contact state (consisting of the first state and the second state).

### (4) Variations

Next, variations of the exemplary embodiment will be enumerated one after another. Note that the variations to be described below may be adopted in combination as appropriate.

The functions of the control system 1 according to the exemplary embodiment described above may also be implemented as a control method, a computer program, or a non-transitory storage medium on which the computer program is stored.

The control system 1 according to the present disclosure includes a computer system. The computer system includes a processor and a memory as principal hardware components thereof. The computer system performs the functions of the control system 1 according to the present disclosure by making the processor execute a program stored in the memory of the computer system. The program may be stored in advance in the memory of the computer system. Alternatively, the program may also be downloaded through a telecommunications line or be distributed after having been recorded in some non-transitory storage medium such as a memory card, an optical disc, or a hard disk drive, any of which is readable for the computer system. The processor of the computer system may be made up of a single or a plurality of electronic circuits including a semiconductor integrated circuit (IC) or a large-scale integrated circuit (LSI). As used herein, the "integrated circuit" such as an IC or an LSI is called by a different name depending on the degree of integration thereof. Examples of the integrated circuits such as an IC or an LSI include integrated circuits called a "system LSI," a "very-large-scale integrated circuit (VLSI)," and an "ultra-large-scale integrated circuit (ULSI)." Optionally, a field-programmable gate array (FPGA) to be programmed after an LSI has been fabricated or a reconfigurable logic device allowing the connections or circuit sections inside of an LSI to be reconfigured may also be adopted as the processor. Those electronic circuits may be either integrated together on a single chip or distributed on multiple chips, whichever is appropriate. Those multiple chips may be aggregated together in a single device or distributed in multiple devices without limitation. As used herein, the "computer system" includes a microcontroller including one or more processors and one or more memories. Thus, the microcontroller may also be implemented as a single or a plurality of electronic circuits including a semiconductor integrated circuit or a large-scale integrated circuit.

In the exemplary embodiment described above, the multiple functions of the control system 1 are aggregated in a single housing. However, this is not an essential configuration for the control system 1. Alternatively, the respective constituent elements of the control system 1 may also be distributed in multiple housings.

Conversely, multiple functions of the control system 1 may be aggregated together in a single housing. Furthermore, at least some functions of the control system 1 (e.g., some functions of the control system 1) may be implemented as a cloud computing system.

In the exemplary embodiment described above, the horizon lengths are adjusted in the first state and the second state with respect to both the prediction horizon Hp and the control horizon Hu. However, this is only an example and should not be construed as limiting. Alternatively, the adjustor 22 may adjust the horizon lengths in the first state and the second state with respect to only the prediction horizon Hp. Still alternatively, the adjustor 22 may adjust the horizon lengths in the first state and the second state with respect to only the control horizon Hu.

In the exemplary embodiment described above, the horizon length is made shorter in the second state than in the first state with respect to both the prediction horizon Hp and the control horizon Hu. However, the horizon length does not have to be made shorter in the second state than in the first state with respect to both the prediction horizon Hp and the control horizon Hu. Alternatively, the horizon length may be made shorter in the second state than in the first state with respect to the prediction horizon Hp and the horizon length may be made longer in the second state than in the first state with respect to the control horizon Hu to the contrary. Even in that case, the calculation time for the model predictive controller 3 will also be shortened.

Optionally, the control system 1 may selectively decide, in accordance with an operating command entered by the user, for which of the prediction horizon Hp or the control horizon Hu the horizon length should be adjusted by the adjustor 22. The control system 1 may include an operating member (user interface) for accepting the operating command.

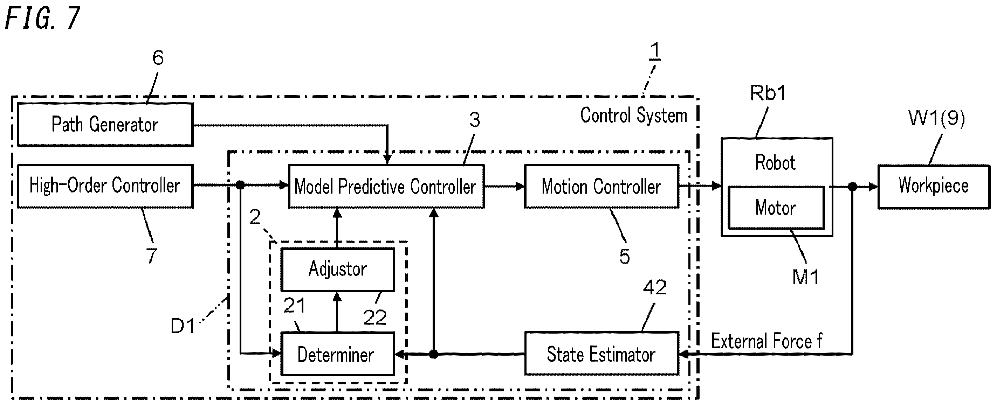

The control system 1 according to the exemplary embodiment described above includes a force sensor (detector 41) and the result of detection (external force Fm) detected (measured) by the detector 41 is entered into the processor 2 and the model predictive controller 3. Alternatively, the control system 1 may include a state estimator 42 instead of the detector 41 as shown in FIG. 7. The state estimator 42 may be included to form part of the servo driver D1.

In the variation shown in FIG. 7, the state estimator 42 estimates the external force f applied to the robot Rb1 in the contact state. In the variation shown in FIG. 7, the determiner 21 determines, in accordance with the relationship between the target force and the result of estimation made by the state estimator 42, whether the contact state is the first state or the second state.

The state estimator 42 is implemented as, for example, a disturbance observer for estimating the external force f applied to the robot Rb1. The state estimator 42 estimates the disturbance (external force f) based on, for example, the second manipulative variable (drive current) supplied from the motion controller 5 to the robot Rb1 and the controlled variable provided by the robot Rb1 (such as the position, speed, and other parameters of the motor M1 which are provided by an encoder). The state estimator 42 enters the result of estimation into the determiner 21 of the processor 2 and the model predictive controller 3.

Even in the variation shown in FIG. 7, the calculation time for the model predictive control may also be shortened, thus contributing to speeding up the processing concerning the force control of the robot Rb1.

Optionally, the control system 1 may include both the force sensor (detector 41) and the state estimator 42. In that case, the determiner 21 of the processor 2 may use the result of measurement made by the force sensor and the model predictive controller 3 may use the result of estimation made by the state estimator 42.

In the exemplary embodiment described above, the object 9 is a metallic member. However, the material for the object 9 is not limited to any particular one. Nevertheless, if the object 9 is a metallic member as in the embodiment described above, the dynamic property thereof hardly changes, which is beneficial for the control system 1.

In the embodiment described above, in each of the first state and the second state, the control horizon Hu has a shorter horizon length than the prediction horizon Hp. Alternatively, the control horizon Hu may have as long a horizon length as the prediction horizon Hp in each of the first state and the second state.

In the exemplary embodiment described above, force control of the robot Rb1 is supposed to be performed such that the workpiece W1 is the object 9, the end effector A1 is attached to the robot Rb1, and the end effector A1 moves with respect to an environment including the workpiece W1 (object 9). However, this is only an example and should not be construed as limiting. Alternatively, for example, force control of the robot Rb1 may also be performed such that the workpiece W1 is attached to the robot Rb1 and the workpiece W1 moves with respect to an environment including a fixed effector (object 9).

### (Recapitulation)

The exemplary embodiment and its variations described above are specific implementations of the following aspects of the present disclosure.

A control system (1) according to a first aspect performs control about a motion path of a control target (such as a robot Rb1) along which the control target possibly makes direct or indirect contact with an object (9). The control system (1) includes a model predictive controller (3), a determiner (21), and an adjustor (22). The model predictive controller (3) determines, using model predictive control, a manipulative variable to bring external force applied from the object (9) to the control target at a time of the contact into agreement with target force. The determiner (21) determines whether a state of the contact of the control target (such as a robot Rb1) with the object (9) at a first point in time is a first state or a second state. The first point in time is either simultaneous with, or later than, a second point in time when vibration is produced by the contact of the control target with the object (9). The first state is a state before the vibration settles. The second state is a state after the vibration has settled. The adjustor (22) adjusts, in accordance with a decision made by the determiner (21), a horizon length of at least one horizon selected from the group consisting of a prediction horizon (Hp) and a control horizon (Hu). Both the prediction horizon (Hp) and the control horizon (Hu) are applied to the model predictive control.

According to this aspect, the horizon length of at least one of a prediction horizon (Hp) or a control horizon (Hu) is adjusted depending on whether the state of contact is a first state or a second state. This may shorten the calculation time for the model predictive control. Consequently, this control system (1) achieves the advantage of contributing to speeding up the processing concerning the force control of a control target.

In a control system (1) according to a second aspect, which may be implemented in conjunction with the first aspect, the adjustor (22) adjusts, when the determiner (21) has determined the state of the contact to be the second state, the horizon length of the at least one horizon to make the horizon length shorter in the second state than in the first state.

According to this aspect, when the state of contact is the second state, the horizon length of at least one of the prediction horizon (Hp) or the control horizon (Hu) is adjusted. This may shorten the calculation time for the model predictive control. Consequently, this control system (1) achieves the advantage of contributing to speeding up the processing concerning the force control of a control target.

A control system (1) according to a third aspect, which may be implemented in conjunction with the first or second aspect, further includes a state estimator (42) that estimates the external force applied to the control target in the state of the contact.

This aspect allows the external force applied to the control target in the state of contact to be estimated accurately.

In a control system (1) according to a fourth aspect, which may be implemented in conjunction with the third aspect, the determiner (21) determines, based on a relationship between the target force and a result of estimation made by the state estimator (42), whether the state of the contact is the first state or the second state.

This aspect allows for more accurately determining whether the state of the contact is the first state or the second state.

A control system (1) according to a fifth aspect, which may be implemented in conjunction with the first or second aspect, further includes a detector (41) for detecting the external force applied to the control target in the state of the contact.

This aspect allows the external force applied to the control target in the state of contact to be estimated accurately.

In a control system (1) according to a sixth aspect, which may be implemented in conjunction with the fifth aspect, the determiner (21) determines, based on a relationship between the target force and a result of detection made by the detector (41), whether the state of the contact is the first state or the second state.

This aspect allows for more accurately determining whether the state of the contact is the first state or the second state.

In a control system (1) according to a seventh aspect, which may be implemented in conjunction with any one of the first to sixth aspects, the determiner (21) performs first determination processing of determining whether a calculated value based on a difference between the target force and the external force is equal to or less than a predetermined value.

This aspect makes it easier to determine whether the state of the contact is the first state or the second state.

In a control system (1) according to an eighth aspect, which may be implemented in conjunction with the seventh aspect, the determiner (21) determines the state of the contact to be the first state when the calculated value turns out to be greater than the predetermined value in the first determination processing.

This aspect allows the state of the contact to be determined more accurately if the state of the contact is the first state.

In a control system (1) according to a ninth aspect, which may be implemented in conjunction with the seventh or eighth aspect, the determiner (21) performs second determination processing of determining whether the duration of a state where the calculated value remains equal to or less than the predetermined value is equal to or longer than a predetermined period.

This aspect makes it easier to determine whether the state of the contact is the first state or the second state.

In a control system (1) according to a tenth aspect, which may be implemented in conjunction with the ninth aspect, the determiner (21) determines the state of the contact to be the first state when the duration of the state where the calculated value remains equal to or less than the predetermined value turns out to be shorter than the predetermined period in the second determination processing.

This aspect allows the state of the contact to be determined more accurately if the state of the contact is the first state.

In a control system (1) according to an eleventh aspect, which may be implemented in conjunction with the ninth or tenth aspect, the determiner (21) performs the first determination processing and the second determination processing repeatedly on the target force.

This aspect allows the force control of the control target to be performed with more stability.

A control system (1) according to a twelfth aspect, which may be implemented in conjunction with any one of the first to eleventh aspects, further includes a path generator (6) for generating data about the motion path and entering the data into the model predictive controller (3).

This aspect allows the force control of the control target to be performed with more stability.

A control system (1) according to a thirteenth aspect, which may be implemented in conjunction with any one of the first to twelfth aspects, further includes a motion controller (5) for controlling a motion of the control target in accordance with the manipulative variable output by the model predictive controller (3).

This aspect allows the force control of the control target to be performed with more stability.

In a control system (1) according to a fourteenth aspect, which may be implemented in conjunction with any one of the first to thirteenth aspects, the object (9) is a metallic member.

This aspect allows the force control of the control target to be performed with more stability when the object (9) is a metallic member.

A control method according to a fifteenth aspect is a method for performing control about a motion path of a control target (such as a robot Rb1) along which the control target possibly makes direct or indirect contact with an object (9). The control method includes a model predictive control step, a determination step, and an adjustment step. The model predictive control step includes determining, using model predictive control, a manipulative variable to bring external force applied from the object (9) to the control target at a time of the contact into agreement with target force. The determination step includes determining whether a state of the contact of the control target (such as a robot Rb1) with the object (9) at a first point in time is a first state or a second state. The first point in time is either simultaneous with, or later than, a second point in time when vibration is produced by the contact of the control target with the object (9). The first state is a state before the vibration settles. The second state is a state after the vibration has settled. The adjustment step includes adjusting, in accordance with a decision made in the determination step, a horizon length of at least one horizon selected from the group consisting of a prediction horizon (Hp) and a control horizon (Hu). Both the prediction horizon (Hp) and the control horizon (Hu) are applied to the model predictive control.

This aspect may provide a control method which contributes to speeding up the processing concerning the force control of a control target.

A program according to a sixteenth aspect is designed to cause one or more processors to perform the control method according to the fifteenth aspect.

This aspect may provide a function which contributes to speeding up the processing concerning the force control of a control target.

Note that the constituent elements according to the second to fourteenth aspects are not essential constituent elements for the control system (1) but may be omitted as appropriate.

### Industrial Applicability

A control system, control method, and program according to the present disclosure contribute to speeding up the processing concerning the force control of a control target, and therefore, may have the processing concerning the force control of a control target such as a robot done in a shorter time. Thus, the control system, control method, and program according to the present disclosure are effectively applicable on an industrial basis.

### Reference Signs List

- 1: Control System
- 21: Determiner
- 22: Adjustor
- 3: Model Predictive Controller
- 41: Detector
- 42: State Estimator
- 5: Motion Controller
- 6: Path Generator
- 9: Object
- Hp: Prediction Horizon
- Hu: Control Horizon
- Rb1: Robot (Control Target)

## Claims

1. A control system configured to perform control about a motion path of a control target along which the control target possibly makes direct or indirect contact with an object, the control system comprising:
a model predictive controller configured to determine, using model predictive control, a manipulative variable to bring external force applied from the object to the control target at a time of the contact into agreement with target force;
a determiner configured to determine whether a state of the contact of the control target with the object at a first point in time is a first state or a second state, the first point in time being either simultaneous with, or later than, a second point in time when vibration is produced by the contact of the control target with the object, the first state being a state before the vibration settles, the second state being a state after the vibration has settled; and
an adjustor configured to adjust, in accordance with a decision made by the determiner, a horizon length of at least one horizon selected from the group consisting of a prediction horizon and a control horizon, both the prediction horizon and the control horizon being applied to the model predictive control.

2. The control system of claim 1, wherein
the adjustor is configured to, when the determiner has determined the state of the contact to be the second state, adjust the horizon length of the at least one horizon to make the horizon length shorter in the second state than in the first state.

3. The control system of claim 1 or 2, further comprising a state estimator configured to estimate the external force applied to the control target in the state of the contact.

4. The control system of claim 3, wherein
the determiner is configured to determine, based on a relationship between the target force and a result of estimation made by the state estimator, whether the state of the contact is the first state or the second state.

5. The control system of claim 1 or 2, further comprising a detector configured to detect the external force applied to the control target in the state of the contact.

6. The control system of claim 5, wherein
the determiner is configured to determine, based on a relationship between the target force and a result of detection made by the detector, whether the state of the contact is the first state or the second state.

7. The control system of any one of claims 1 to 6, wherein
the determiner is configured to perform first determination processing of determining whether a calculated value based on a difference between the target force and the external force is equal to or less than a predetermined value.

8. The control system of claim 7, wherein
the determiner is configured to determine the state of the contact to be the first state when the calculated value turns out to be greater than the predetermined value in the first determination processing.

9. The control system of claim 7 or 8, wherein
the determiner is configured to perform second determination processing of determining whether duration of a state where the calculated value remains equal to or less than the predetermined value is equal to or longer than a predetermined period.

10. The control system of claim 9, wherein
the determiner is configured to determine the state of the contact to be the first state when duration of the state where the calculated value remains equal to or less than the predetermined value turns out to be shorter than the predetermined period in the second determination processing.

11. The control system of claim 9 or 10, wherein
the determiner is configured to perform the first determination processing and the second determination processing repeatedly on the target force.

12. The control system of any one of claims 1 to 11, further comprising a path generator configured to generate data about the motion path and enter the data into the model predictive controller.

13. The control system of any one of claims 1 to 12, further comprising a motion controller configured to control a motion of the control target in accordance with the manipulative variable output by the model predictive controller.

14. The control system of any one of claims 1 to 13, wherein
the object is a metallic member.

15. A control method for performing control about a motion path of a control target along which the control target possibly makes direct or indirect contact with an object, the control method comprising:
a model predictive control step including determining, using model predictive control, a manipulative variable to bring external force applied from the object to the control target at a time of the contact into agreement with target force;
a determination step including determining whether a state of the contact of the control target with the object at a first point in time is a first state or a second state, the first point in time being either simultaneous with, or later than, a second point in time when vibration is produced by the contact of the control target with the object, the first state being a state before the vibration settles, the second state being a state after the vibration has settled; and
an adjustment step including adjusting, in accordance with a decision made in the determination step, a horizon length of at least one horizon selected from the group consisting of a prediction horizon and a control horizon, both the prediction horizon and the control horizon being applied to the model predictive control.

16. A program designed to cause one or more processors to perform the control method of claim 15.
